(19) **Europäisches Patentamt / European Patent Office / Office européen des brevets**

(11) **EP 3 568 433 B1**

(12) # EUROPEAN PATENT SPECIFICATION

(45) Date of publication and mention
of the grant of the patent:
**26.04.2023 Bulletin 2023/17**

(21) Application number: **18701805.6**

(22) Date of filing: **11.01.2018**

(51) International Patent Classification (IPC):
**C08K 9/00** *(2006.01)*

(52) Cooperative Patent Classification (CPC):
(C-Sets available)
**C08K 9/12; C08K 9/00;** C08K 2201/019     (Cont.)

(86) International application number:
**PCT/IB2018/050185**

(87) International publication number:
**WO 2018/130970 (19.07.2018 Gazette 2018/29)**

(54) **LASER PLATABLE THERMOPLASTIC COMPOSITIONS WITH A LASER ACTIVATABLE METAL COMPOUND AND SHAPED ARTICLES THEREFROM**

LASERPLATTIERBARE THERMOPLASTISCHE ZUSAMMENSETZUNGEN MIT EINER LASERAKTIVIERBAREN METALLVERBINDUNG UND DARAUS GEFORMTE GEGENSTÄNDE

COMPOSITIONS THERMOPLASTIQUES POUVANT ÊTRE PLAQUÉES AU LASER AVEC UN COMPOSÉ MÉTALLIQUE ACTIVABLE PAR LASER ET ARTICLES FAÇONNÉS À PARTIR DE CELLES-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.01.2017   US 201762444855 P**

(43) Date of publication of application:
**20.11.2019   Bulletin 2019/47**

(73) Proprietor: **SHPP Global Technologies B.V.**
**4612 PX Bergen op Zoom (NL)**

(72) Inventors:
• **WANG, Jian**
  **Shanghai 201319 (CN)**
• **CHENG, Yunan**
  **Shanghai 201203 (CN)**
• **ZHANG, Yaqin**
  **Shanghai 201315 (CN)**

• **SONG, Shijie**
  **Shanghai 201109 (CN)**

(74) Representative: **Elzaburu S.L.P.**
**Edificio Torre de Cristal**
**Paseo de la Castellana 259 C, planta 28**
**28046 Madrid (ES)**

(56) References cited:
**EP-A1- 0 750 012       EP-A1- 2 711 399**
**WO-A1-2014/042284    WO-A1-2014/042285**
**WO-A1-2014/180550**

(52) Cooperative Patent Classification (CPC): (Cont.)

C-Sets
**C08K 9/12, C08L 69/00**

**Description**

TECHNICAL FIELD

The disclosure concerns platable thermoplastic laser direct structuring compositions and shaped articles made therefrom.

BACKGROUND

Laser direct structuring (LDS), a new Molded Interconnect Device (MID) technology that can produce conductive path structures on a non-conductive plastic surfaces, has been widely used in electronic application areas such as antennas and circuits. Compared to the conventional methods, such as hot stamping and 2-shot molding, LDS has advantages in design capability, cycle time, cost efficiency, miniaturization, diversification, and functionality of the antenna. Therefore, LDS has been adopted as the major trend in the electronic industry.

To make the thermoplastics with LDS capability, a laser activatable (or activable) component is a necessary component to release metal seeds after laser treatment. Presently, limited metal compounds are suitable for LDS application, such as the copper hydroxide phosphate and copper chromite black. For copper hydroxide phosphate, the plating efficiency is good, but with weak thermal stability, especially when in high heat application areas. For copper chromite black, the thermal stability is good, but due to the intrinsic dark color, only black color products could be available. Thus, it is desirable to have platable metal compounds with light color and good thermal stability.

International Patent Application WO 2014/180550 (published 13 November 2014) discloses LDS-active additives such as titanium dioxide and antimony-doped tin for a polymer composition.

European Patent Application EP 2711399 (published 26 March 2014) discloses thermoplastic resins compositions comprising a crystalline thermoplastic resin, glass filler, a laser direct structuring additive, and titanium dioxide.

International Patent Application WO 2014/042284 (published 20 March 2014) discloses a resin composition comprising a polycarbonate resin, a styrene-based resin, glass fiber, and an LDS additive.

International Patent Application WO 2014/042285 (published 20 March 2014) discloses a polycarbonate resin, a styrene-based resin, glass filler, and an LDS additive comprising a metal oxide particle comprising titanium oxide coated with a composition comprising tin as a main component and antimony.

European Patent Application EP 0750012 (published 27 December 1996) discloses laser markable plastics that include non-glossy pigments based on layered silicates coated with one or more metal oxides, iron blue, and/or basic copper phosphate.

**SUMMARY**

The present disclosure satisfies these and other needs by providing ultrahigh performance thermoplastic polymer compositions which integrated good mechanical performance with laser direct structuring function, thus greatly expanding the scope of laser direct structuring technology.

In one aspect, the present disclosure pertains to blended thermoplastic compositions comprising: (a) about 20 wt% to about 99 wt% of a polymer component as defined in the prsent claims and (b) about 1 wt% to about 30 wt% of a laser activatable additive having a core-shell structure; wherein the core comprises an inorganic filler and the shell comprises a laser activatable component comprising copper hydroxide phosphate or tin and antimony oxide, said core comprising from about 10 wt% to about 80 wt% of the laser activatable additive and said shell comprising from about 20 wt% to about 90 wt% of the laser activatable additive; wherein the weight percent values of (a) and (b) are based on the total weight of the composition and the combined weight percent value of all components does not exceed 100 wt. %.

In one aspect, the present disclosure pertains to methods of improving mechanical properties of blended thermoplastic compositions comprising:

(a) about 20 wt% to about 99 wt% of a polymer component as defined in the present claims and
(b) about 1 wt% to about 30 wt% of a laser activatable additive having a core-shell structure; wherein the core comprises an inorganic filler and the shell comprises a laser activatable component comprising copper hydroxide phosphate or tin and antimony oxide, said core comprising from about 10 wt% to about 80 wt% of the laser activatable additive and said shell comprising from about 20 wt% to about 90 wt% of the laser activatable additive

wherein the weight percent values of (a) and (b) are based on the total weight of the composition and the combined weight percent value of all components does not exceed 100 wt. %.

In various further aspects, the disclosure relates to articles comprising the disclosed compositions.

## DETAILED DESCRIPTION

The present disclosure can be understood more readily by reference to the following detailed description of the disclosure and the Examples included therein.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting. Although any methods and materials similar or equivalent to those described herein can be used in the practice or testing of the present disclosure, example methods and materials are now described.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; and the number or type of embodiments described in the specification.

All publications mentioned herein, for example, disclose and describe the methods and/or materials in connection with which the publications are cited.

## DEFINITIONS

It is also to be understood that the terminology used herein is for the purpose of describing particular aspects only and is not intended to be limiting. As used in the specification and in the claims, the term "comprising" can include the embodiments "consisting of" and "consisting essentially of." Unless defined otherwise, all technical and scientific terms used herein have the same meaning as commonly understood by one of ordinary skill in the art to which this disclosure belongs.

As used in the specification and the appended claims, the singular forms "a," "an" and "the" include plural referents unless the context clearly dictates otherwise. Thus, for example, reference to "a polyamide polymer" includes mixtures of two or more polyamide polymers.

As used herein, the term "combination" is inclusive of blends, mixtures, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

As used herein, the terms "optional" or "optionally" means that the subsequently described event or circumstance can or cannot occur, and that the description includes instances where said event or circumstance occurs and instances where it does not. For example, the phrase "optionally substituted alkyl" means that the alkyl group can or cannot be substituted and that the description includes both substituted and unsubstituted alkyl groups.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

As used herein, the terms "weight average molecular weight" or "Mw" can be used interchangeably, and are defined by the formula:

$$M_W = \frac{\sum N_i M_i^2}{\sum N_i M_i},$$

where $M_i$ is the molecular weight of a chain and $N_i$ is the number of chains of that molecular weight. Compared to $M_n$, $M_w$ takes into account the molecular weight of a given chain in determining contributions to the molecular weight average. Thus, the greater the molecular weight of a given chain, the more the chain contributes to the $M_w$. $M_w$ can be determined for polymers, e.g. polycarbonate polymers, by methods well known to a person having ordinary skill in the art using molecular weight standards, e.g. polycarbonate standards or polystyrene standards, preferably certified or traceable molecular weight standards.

In one aspect, "substantially free of" can be less than about 0.5 weight percent (wt.%). In another aspect, substantially free of can be less than about 0.1 wt.%. In another aspect, substantially free of can be less than about 0.01 wt.%. In yet another aspect, substantially free of can be less than about 100 ppm. In yet another aspect, substantially free can refer to an amount, if present at all, below a detectable level.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions, and it is understood that there are a variety of structures that can perform the same function that are related to the disclosed structures, and that these structures will typically achieve the same result.

## BLENDED THERMOPLASTIC COMPOSITIONS

In one aspect, the present disclosure pertains to blended thermoplastic compositions comprising:

(a) about 20 wt% to about 99 wt% of a base polymer component as defined in the present claims and

(b) about 1 wt% to about 30 wt% of a laser activatable additive having a core-shell structure; wherein the core comprises an inorganic filler and the shell comprises a laser activatable component comprising copper hydroxide phosphate or tin and antimony oxide, said core comprising from about 10 wt% to about 80 wt% of the laser activatable additive and said shell comprising from about 20 wt% to about 90 wt% of the laser activatable additive wherein the weight percent values of (a) and (b) are based on the total weight of the composition and the combined weight percent value of all components does not exceed 100 wt. %.

In various aspects, the compositions of the present disclosure further comprise an additive selected from coupling agents, antioxidants, mold release agents, UV absorbers, light stabilizers, heat stabilizers, lubricants, plasticizers, pigments, dyes, colorants, anti-static agents, nucleating agents, anti-drip agents, acid scavengers, and combinations of two or more of the foregoing. In a further aspect, compositions of the present disclosure further comprise at least one additive selected from a flame retardant, a colorant, a primary anti-oxidant, and a secondary anti-oxidant.

In some aspects, the polymer component comprises comprising polypropylene, polyethylene, ethylene based copolymer, polycarbonate (PC), polyamide (PA), polyester, polyoxymethylene (POM), polybutylene terephthalate (PBT), polyethylene terephthalate (PET), polycyclohexylendimethylene terephthalate (PCT), liquid crystal polymers (LPC), polyphenylene sulfide (PPS), polyphenylene ether (PPE), polyphenylene oxide-polystyrene blends, polystyrene, high impact modified polystyrene, acrylonitrile-butadiene-styrene (ABS) terpolymer, acrylic polymer, polyetherimide (PEI), polyurethane, polyetheretherketone (PEEK), poly ether sulphone (PES), polyphthalamide (PPA) or mixtures thereof.

## POLYMER COMPONENT

The blended thermoplastic compositions of the present disclosure comprise a polymer component as defined in the present claims

## LASER DIRECT STRUCTURING ADDITIVE

In addition to the thermoplastic resin, the compositions of the present disclosure also include a laser direct structuring (LDS) additive. The LDS additive is selected to enable the composition to be used in a laser direct structuring process. In an LDS process, a laser beam exposes the LDS additive to place it at the surface of the thermoplastic composition and to activate metal atoms from the LDS additive. As such, the LDS additive is selected such that, upon exposed to a laser beam, metal atoms are activated and exposed and in areas not exposed by the laser beam, no metal atoms are exposed. In addition, the LDS additive is selected such that, after being exposed to laser beam, the etching area is capable of being plated to form conductive structure.

As used herein, laser activatable, as in laser activatable additive may refer to an additive or agent that is activated by a physical-chemical reaction induced by laser energy such as a focused laser beam. For example, a laser-activatable additive may be introduced into a thermoplastic. The additive may be activated by a laser beam. A physical-chemical reaction forms metallic nuclei. These nuclei may act as a catalyst for reductive copper plating. In addition to activation, the laser beam may create a microscopically rough surface at which the copper is anchored during a metallization process.

As used herein "capable of being plated" refers to a material wherein a substantially uniform metal plating layer can be plated on laser-etched area. This process is different than laser marking wherein the main outcome of laser marking is a color change in the material under the effect of energy radiation. The key characterization for laser marking is the contrast between the mark and the substrate.

Plating index is defined as the ratio between average copper thickness obtained under a specific laser parameter of the tested sample and that of the reference sample. The reference sample used herein was a PBT based LDS with commercial name of Pocan™ DP 7102. A plating index of over (greater than) 0.7 is preferred.

Conversely, for LDS, the goal is the formation of metal seeds on the laser etched surface, and the final metallization layer during the following plating process. Plating rate and adhesion of plated layers are the key evaluation requirements. Color here means the substrate made from these materials itself not the color change under the laser radiation. As such, in addition to enabling the composition to be used in a laser direct structuring process, the LDS additive used in the present disclosure is also selected to help enable the composition to be colored while maintaining physical properties.

LDS compounds used in the instant invention have a core-shell (or, designated as core/shell) structure where a core is coated with a laser activatable component (the shell). The 'laser activatable component' is a component that releases metal seeds after laser activating. The metal seeds act as catalysts for chemical plating.

In some preferred embodiments, the core of the LDS additive is essentially completely covered with the shell component. In a typical embodiment, the core and the shell are of a different composition.

In some embodiments, the shell component has a thickness of from about 1 nm to about 50 micrometers ($\mu$m). In certain embodiments, the core has a mean particle size of about 50 nanometers (nm) to about 500 $\mu$m.

In some embodiments, the core comprises an inorganic filler and the shell comprises a laser activatable component comprising one or more of copper and tin. In some preferred embodiments, the core and the shell are of different composition. In some embodiments, the core comprises titanium dioxide $TiO_2$, mica or talc. In certain embodiments, the laser activatable component comprises tin and antimony. Some preferred embodiments use a mixed metal oxide comprising tin oxide and antimony. For some compositions, the laser activatable additive comprises about 10 wt% to about 80 wt% (or 10 wt% to 80 wt%) core and about 20 wt% to about 90 wt% (or 20 wt% to 90 wt%) shell or about 30 wt% to about 70 wt% (or 30 wt% to 70 wt%) core and about 30 wt% to about 70 wt% (or 30 wt% to 70 wt%) shell, or about 45 wt% to about 65 wt% (or 45 wt% to 65wt%) core and about 35 wt% to about 55 wt% (or 35 wt% to 55 wt%) shell. Some shells comprise Tin-Antimony Cassiterite Grey [(Sb/Sn)O$_2$] or copper hydroxide phosphate.

The amount of the LDS additive included is sufficient to enable plating of the track formed after activation by the laser while not adversely affecting mechanical properties.

In a further aspect, the laser direct structure additive is present in an amount from about 1 wt% to about 30 wt%. In a still further aspect, the laser direct structure additive is present in an amount from about 2 wt% to about 20 wt%. In yet a further aspect, the laser direct structure additive is present in an amount from about 7 wt% to about 18 wt%. In an even further aspect, the laser direct structure additive is present in an amount from about 5 wt% to about 15 wt%, or from about 5 wt% to about 10 wt%.

The LDS additive is selected such that, after activating with a laser, the conductive path can be formed by a standard electroless plating process. When the LDS additive is exposed to the laser, elemental metal is released. The laser draws the circuit pattern onto the part and leaves behind a roughened surface containing embedded metal particles. These particles act as nuclei for the crystal growth during a subsequent plating process, such as a copper plating process. Other electroless plating processes that can be used include, but are not limited to, gold plating, nickel plating, silver plating, zinc plating, tin plating or the like.

## OPTIONAL POLYMER COMPOSITION ADDITIVES

The disclosed polymer compositions can optionally comprise one or more additives conventionally used in the manufacture of molded thermoplastic parts with the proviso that the optional additives do not adversely affect the desired properties of the resulting composition. Mixtures of optional additives can also be used. Such additives can be mixed at a suitable time during the mixing of the components for forming the composite mixture. For example, the disclosed compositions can comprise one or more lubricants, plasticizers, ultraviolet light absorbing additives, anti-dripping agents, dyes, pigments, stabilizers, anti-static agents, flame-retardants, impact modifiers, colorants, antioxidant, and/or mold release agents. In one aspect, the composition further comprises one or more optional additives selected from an antioxidant, flame retardant, and stabilizer. In a further aspect, the composition further comprises a flame retardant.

Suitable fillers for the compositions of the disclosure include: silica, clays, calcium carbonate, carbon black, kaolin, and whiskers. Other possible fillers include, for example, silicates and silica powders such as aluminum silicate (mullite), synthetic calcium silicate, zirconium silicate, fused silica, crystalline silica graphite, natural silica sand, or the like; boron powders such as boron-nitride powder, boron-silicate powders, or the like; oxides such as titanium dioxide (TiO$_2$), aluminum oxide, magnesium oxide, or the like; calcium sulfate (as its anhydride, dihydrate or trihydrate); calcium carbonates such as chalk, limestone, marble, synthetic precipitated calcium carbonates, or the like; talc, including fibrous, modular, needle shaped, lamellar talc, or the like; wollastonite; surface-treated wollastonite; glass spheres such as hollow and solid glass spheres, silicate spheres, cenospheres, aluminosilicate (armospheres), or the like; kaolin, including hard kaolin, soft kaolin, calcined kaolin, kaolin comprising various coatings known in the art to facilitate compatibility with the polymeric matrix, or the like; single crystal fibers or "whiskers" such as silicon carbide, alumina, boron carbide, iron, nickel, copper, or the like; fibers (including continuous and chopped fibers) such as asbestos, carbon fibers, glass fibers, such as E, A, C, ECR, R, S, D, or NE glasses, or the like; sulfides such as molybdenum sulfide, zinc sulfide or the like; barium compounds such as barium titanate, barium ferrite, barium sulfate, heavy spar, or the like; metals and metal oxides such as particulate or fibrous aluminum, bronze, zinc, copper and nickel or the like; flaked fillers such as glass flakes, flaked silicon carbide, aluminum diboride, aluminum flakes, steel flakes or the like; fibrous fillers, for example short inorganic fibers such as those derived from blends comprising at least one of aluminum silicates, aluminum oxides, magnesium oxides, and calcium sulfate hemihydrate or the like; natural fillers and reinforcements, such as wood flour obtained by pulverizing wood, fibrous products such as cellulose, cotton, sisal, jute, starch, cork flour, lignin, ground nut shells, corn, rice grain husks or the like; organic fillers such as polytetrafluoroethylene; reinforcing organic fibrous fillers formed from organic polymers capable of forming fibers such as poly(ether ketone), polyimide, polybenzoxazole, poly(phenylene sulfide), polyesters, polyethylene, aromatic polyamides, aromatic polyimides, polyetherimides, polytetrafluoroethylene, acrylic resins, poly(vinyl alcohol) or the like; as well as additional fillers and reinforcing agents such as mica, clay, feldspar, flue dust, fillite, quartz, quartzite, perlite, tripoli, diatomaceous earth, carbon black, or the like, or combinations comprising at least one of the foregoing fillers or reinforcing agents.

Exemplary heat stabilizers include, for example, organophosphites such as triphenylphosphite, tris-(2,6-dimethylphenyl)phosphite, tris-(mixed mono-and dinonylphenyl)phosphite or the like; phosphonates such as dimethylbenzenephosphonate or the like, phosphates such as trimethyl phosphate, or the like, or combinations including at least one of the foregoing heat stabilizers. Heat stabilizers are generally used in amounts of from 0.01 to 0.5 parts by weight based on 100 parts by weight of the total composition, excluding any filler.

Exemplary antioxidants include, for example, organophosphites such as tris(nonyl phenyl)phosphite, tris(2,4-di-t-butylphenyl)phosphite, bis(2,4-di-t-butylphenyl)pentaerythritoldiphosphite, distearylpentaerythritoldiphosphite or the like; alkylated monophenols or polyphenols; alkylated reaction products of polyphenols with dienes, such as tetrakis[methylene(3,5-di-tert-butyl-4-hydroxyhydrocinnamate)] methane, or the like; butylated reaction products of para-cresol or dicyclopentadiene; alkylated hydroquinones; hydroxylatedthiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate or the like; amides of beta-(3,5-di-tert-butyl-4-hydroxyphenyl)-propionic acid or the like, or combinations including at least one of the foregoing antioxidants. Antioxidants are generally used in amounts of from 0.01 to 0.5 parts by weight, based on 100 parts by weight of the total composition, excluding any filler.

Exemplary light stabilizers include, for example, benzotriazoles such as 2-(2-hydroxy-5-methylphenyl)benzotriazole, 2-(2-hydroxy-5-tert-octylphenyl)-benzotriazole and 2-hydroxy-4-n-octoxy benzophenone or the like or combinations including at least one of the foregoing light stabilizers. Light stabilizers are generally used in amounts of from 0.1 to 1.0 part by weight, based on 100 parts by weight of the total composition, excluding any filler.

Exemplary plasticizers include, for example, phthalic acid esters such as dioctyl-4,5-epoxy-hexahydrophthalate, tris-(octoxycarbonylethyl) isocyanurate, tristearin, epoxidized soybean oil or the like, or combinations including at least one of the foregoing plasticizers. Plasticizers are generally used in amounts of from 0.5 to 3.0 parts by weight, based on 100 parts by weight of the total composition, excluding any filler.

Exemplary antistatic agents include, for example, glycerol monostearate, sodium stearylsulfonate, sodium dodecylbenzenesulfonate or the like, or combinations of the foregoing antistatic agents. In one aspect, carbon fibers, carbon nanofibers, carbon nanotubes, carbon black, or any combination of the foregoing can be used in a polymeric resin containing chemical antistatic agents to render the composition electrostatically dissipative.

Exemplary mold releasing agents include for example, metal stearate, stearyl stearate, pentaerythritoltetrastearate, beeswax, montan wax, paraffin wax, or the like, or combinations including at least one of the foregoing mold release agents. Mold releasing agents are generally used in amounts of from 0.1 to 1.0 parts by weight, based on 100 parts by weight of the total composition, excluding any filler.

Exemplary ultraviolet (UV) absorbers include for example, hydroxybenzophenones; hydroxybenzotriazoles; hydroxybenzotriazines; cyanoacrylates; oxanilides; benzoxazinones; 2- (2H-benzotriazol-2-yl)-4-(1,1,3,3-tetramethylbutyl)-phenol (CYASORB™ 5411); 2-hydroxy-4-n-octyloxybenzophenone (CYASORB™ 531); 2-[4,6-bis(2,4-dimethylphenyl)-1,3,5-triazin-2-yl]- 5-(octyloxy)-phenol (CYASORB™ 1164); 2,2'-(1,4- phenylene)bis(4H-3,1-benzoxazin-4-one) (CYASORB™ UV- 3638); 1,3-bis[[(2-cyano-3,3-diphenylacryloyl)oxy]-2,2-bis[[(2-cyano-3, 3-diphenylacryloyl)oxy]methyl]propane (UVINUL™ 3030); 2,2'-(1,4-phenylene) bis(4H-3,1-benzoxazin-4-one); 1,3-bis[(2-cyano-3,3-diphenylacryloyl)oxy] -2,2-bis[[(2-cyano-3,3-diphenylacryloyl)oxy]methyl]propane; nano-size inorganic materials such as titanium oxide, cerium oxide, and zinc oxide, all with particle size less than 100 nanometers; or the like, or combinations including at least one of the foregoing UV absorbers. UV absorbers are generally used in amounts of from 0.01 to 3.0 parts by weight, based on 100 parts by weight of the total composition, excluding any filler.

Exemplary lubricants include for example, fatty acid esters such as alkyl stearyl esters, e.g., methyl stearate or the like; mixtures of methyl stearate and hydrophilic and hydrophobic surfactants including polyethylene glycol polymers, polypropylene glycol polymers, and copolymers thereof e.g., methyl stearate and polyethylene-polypropylene glycol copolymers in a suitable solvent; or combinations including at least one of the foregoing lubricants. Lubricants are generally used in amounts of from 0.1 to 5 parts by weight, based on 100 parts by weight of the total composition, excluding any filler.

Exemplary blowing agents include for example, low boiling halohydrocarbons and those that generate carbon dioxide; blowing agents that are solid at room temperature and when heated to temperatures higher than their decomposition temperature, generate gases such as nitrogen, carbon dioxide, ammonia gas, such as azodicarbonamide, metal salts of azodicarbonamide, 4,4' oxybis(benzenesulfonylhydrazide), sodium bicarbonate, ammonium carbonate, or the like, or combinations including at least one of the foregoing blowing agents. Blowing agents are generally used in amounts of from 1 to 20 parts by weight, based on 100 parts by weight of the total composition, excluding any filler.

As noted above, the disclosed polymer compositions can optionally further comprises a flame retardant additive. In various aspects, the flame retardant additive can comprise any flame retardant material or mixture of flame retardant materials suitable for use in the inventive polymer compositions.

In a further aspect, the flame retardant additive comprises a phosphate containing material. In a yet further aspect, the flame retardant additive comprises a phosphate containing material selected from a phosphine, a phosphine oxide, a bisphosphine, a phosphonium salt, a phosphinic acid salt, a phosphoric ester, and a phosphorous ester, or a combination thereof.

In a further aspect, the flame retardant additive comprises a halogen containing material. In other aspects, the flame retardant additive is free of or substantially free of one or more of phosphate and/or a halogen.

In a further aspect, the flame retardant additive comprises an oligomer organophosphorous flame retardant, including for example, bisphenol A diphenyl phosphate (BPADP). In a yet further aspect, the flame retardant is selected from aromatic polyphosphate oligomers, phenoxyphosphazene oligomers, melamine polyphosphate oligomers, and metal phosphinate oligomers, or a combination thereof. In a still further aspect, the flame retardant is selected from oligomeric phosphate, polymeric phosphate, oligomeric phosphonate, or mixed phosphate/phosphonate ester flame retardant compositions. In an even further aspect, the flame retardant is selected from bisphenol-A bis(diphenyl phosphate), 1,3-phenylene tetraphenyl ester, bisphenol-A bis(diphenyl phosphate), red phosphorous, and Clariant Exolit™ OP series FR, or a combination thereof. In a still further aspect, the flame retardant is selected from triphenyl phosphate; cresyldiphenylphosphate; tri(isopropylphenyl)phosphate; resorcinol bis(diphenylphosphate); and bisphenol-A bis(diphenyl phosphate). In a yet further aspect, the flame retardant is bisphenol-A bis(diphenyl phosphate).

Additionally, materials to improve flow and other properties can be added to the composition, such as low molecular weight hydrocarbon resins. Particularly useful classes of low molecular weight hydrocarbon resins are those derived from petroleum $C_5$ to $C_9$ feedstock that are derived from unsaturated $C_5$ to $C_9$ monomers obtained from petroleum cracking. Non-limiting examples include olefins, e.g., pentenes, hexenes, heptenes and the like; diolefins, e.g., pentadienes, hexadienes and the like; cyclic olefins and diolefins, e.g., cyclopentene, cyclopentadiene, cyclohexene, cyclohexadiene, methyl cyclopentadiene and the like; cyclic diolefindienes, e.g., dicyclopentadiene, methylcyclopentadiene dimer and the like; and aromatic hydrocarbons, e.g., vinyltoluenes, indenes, methylindenes and the like. The resins can additionally be partially or fully hydrogenated.

## METHODS OF MANUFACTURE

The compositions of the present disclosure can be blended with the aforementioned ingredients by a variety of methods involving intimate admixing of the materials with any additional additives desired in the formulation. Because of the availability of melt blending equipment in commercial polymer processing facilities, melt processing methods are generally preferred. Illustrative examples of equipment used in such melt processing methods include: co-rotating and counter-rotating extruders, single screw extruders, co-kneaders, disc-pack processors and various other types of extrusion equipment. The temperature of the melt in the present process is preferably minimized in order to avoid excessive degradation of the resins. It is often desirable to maintain the melt temperature between about 230°C and about 350°C in the molten resin composition, although higher temperatures can be used provided that the residence time of the resin in the processing equipment is kept short. In some embodiments the melt processed composition exits processing equipment such as an extruder through small exit holes in a die. The resulting strands of molten resin are cooled by passing the strands through a water bath. The cooled strands can be chopped into small pellets for packaging and further handling.

Compositions can be manufactured by various methods. For example, polymer, and/or other optional components are first blended, optionally with fillers in a HENSCHEL-Mixer high speed mixer. Other low shear processes, including but not limited to hand mixing, can also accomplish this blending. The blend is then fed into the throat of a twin-screw extruder via a hopper. Alternatively, at least one of the components can be incorporated into the composition by feeding directly into the extruder at the throat and/or downstream through a sidestuffer. Additives can also be compounded into a masterbatch with a desired polymeric resin and fed into the extruder. The extruder is generally operated at a temperature higher than that necessary to cause the composition to flow. The extrudate is immediately quenched in a water batch and pelletized. The pellets, so prepared, when cutting the extrudate can be one-fourth inch long or less as desired. Such pellets can be used for subsequent molding, shaping, or forming.

In one aspect, the laser direct structuring process involves three steps: 1) injection molding, 2) laser structuring, and 3) metallizing.

In a further aspect, during the injection molding step, the laser direct structuring additive and reinforcing filler can be mixed with the thermoplastic polymer. In another aspect, the blend composition further comprises one or more optional additives selected from an antioxidant, flame retardant, inorganic filler, and stabilizer. In a still further aspect, single shot injection molding can be used to produce the parts or articles to be laser structured. In at least one aspect, the polymer composition can be mixed at this step and used in the LDS process. In another aspect, additional ingredients can be added to the polymer composition after this step.

In a further aspect, during the laser structuring step, a laser is used to form a conductive path during the laser structuring step. In a still further aspect, the laser used to form a conductive path is laser direct structuring. In a yet further aspect, laser direct structuring comprises laser etching. In an even further aspect, laser etching is carried out to provide an activated surface.

In a further aspect, at least one laser beam draws at least one pattern on the surface of the polymer composition during the laser structuring step. In a still further aspect, the employed filler composition can release at least one metallic nucleus. In a yet further aspect, the at least one metallic nucleus that has been released can act as a catalyst for reductive copper plating process.

Laser direct structuring is can be carried out on an article comprising the disclosed blended thermoplastic compositions at a power setting from about 1 watt (W) to about 14 W, a frequency from about 30 kilohertz (kHz) to about 120 kHz, and a speed of about 1 m/s to about 5 m/s. In a further aspect, laser etching is carried out at about 1 w to about 10 w power with a frequency from about 30 kHz to about 110 kHz and a speed of about 1 meter per second (m/s) to about 5 m/s. In a still further aspect, laser etching is carried out at about 1 W to about 10 W power with a frequency from about 40 kHz to about 100 kHz and a speed of about 2 m/s to about 4 m/s. In a yet further aspect, laser etching is carried out at about 3.5 W power with a frequency of about 40 kHz and a speed of about 2 m/s.

In various aspects, laser direct structuring is carried out on an article comprising the disclosed blended thermoplastic compositions at a power setting of 2 W or about 2 W. In a further aspect, laser direct structuring is carried out on an article comprising the disclosed blended thermoplastic compositions at a power setting of 3 W or about 3 W. In a still further aspect, laser direct structuring is carried out on an article comprising the disclosed blended thermoplastic compositions at a power setting of 4 W or about 4 W. In a yet further aspect, laser direct structuring is carried out on an article comprising the disclosed blended thermoplastic compositions at a power setting of 5 W or about 5 W. In an even further aspect, laser direct structuring is carried out on an article comprising the disclosed blended thermoplastic compositions at a power setting of 6 W or about 6 W. In a still further aspect, laser direct structuring is carried out on an article comprising the disclosed blended thermoplastic compositions at a power setting of 7 W or about 7 W. In a yet further aspect, laser direct structuring is carried out on an article comprising the disclosed blended thermoplastic compositions at a power setting of 8 W or about 8 W. In an even further aspect, laser direct structuring is carried out on an article comprising the disclosed blended thermoplastic compositions at a power setting of 9 W or about 9 W. In a still further aspect, laser direct structuring is carried out on an article comprising the disclosed blended thermoplastic compositions at a power setting of 10 W or about 10 W. In a yet further aspect, laser direct structuring is carried out on an article comprising the disclosed blended thermoplastic compositions at a power setting of 11 W or about 11 W.

In various aspects, laser direct structuring is carried out on an article comprising the disclosed blended thermoplastic compositions at a frequency setting of about 40 kHz. In a further aspect, laser direct structuring is carried out on an article comprising the disclosed blended thermoplastic compositions at a frequency setting of 50 kHz or about 50 kHz. In a still further aspect, laser direct structuring is carried out on an article comprising the disclosed blended thermoplastic compositions at a frequency setting of 60 kHz or about 60 kHz. In a yet further aspect, laser direct structuring is carried out on an article comprising the disclosed blended thermoplastic compositions at a frequency setting of 70 kHz or about 70 kHz. In an even further aspect, laser direct structuring is carried out on an article comprising the disclosed blended thermoplastic compositions at a frequency setting of 80 kHz or about 80 kHz. In a still further aspect, laser direct structuring is carried out on an article comprising the disclosed blended thermoplastic compositions at a frequency setting of 90 kHz or about 90 kHz. In a yet further aspect, laser direct structuring is carried out on an article comprising the disclosed blended thermoplastic compositions at a frequency setting of 100 kHz or about 100 kHz. In an even further aspect, laser direct structuring is carried out on an article comprising the disclosed blended thermoplastic compositions at a frequency setting of 110 kHz or about 110 kHz. In a still further aspect, laser direct structuring is carried out on an article comprising the disclosed blended thermoplastic compositions at a frequency setting of 120 kHz or about 120 kHz.

In various aspects, laser direct structuring is carried out on an article comprising the disclosed blended thermoplastic compositions at a speed of 1 m/s or about 1 m/s. In a further aspect, laser direct structuring is carried out on an article comprising the disclosed blended thermoplastic compositions at a speed of 2 m/s or about 2 m/s. In a still further aspect, laser direct structuring is carried out on an article comprising the disclosed blended thermoplastic compositions at a speed of 3 m/s or about 3 m/s. In a yet further aspect, laser direct structuring is carried out on an article comprising the disclosed blended thermoplastic compositions at a speed of 4 m/s or about 4 m/s. In an even further aspect, laser direct structuring is carried out on an article comprising the disclosed blended thermoplastic compositions at a speed of 5 m/s or about 5 m/s.

In a further aspect, a rough surface can form in the LDS process. In a still further aspect, the rough surface can entangle the copper plate with the polymer matrix in the polymer composition, which can provide adhesion between the copper plate and the polymer composition. The metalizing step can, in various aspects, be performed using conventional techniques. For example, in one aspect, an electroless copper plating bath is used during the metallization step in the LDS process. Thus, in various aspects, plating a metal layer onto a conductive path is metallization. In a still further aspect, metallization can comprise the steps: a) cleaning the etched surface; b) additive build-up of tracks; and c) plating.

In various aspects, the present disclosure pertains to methods of improving mechanical performance of a blended thermoplastic composition, the method comprising the step of combining: from about 20 wt% to about 99 wt% of a polymer and from about 1 wt% to about 30 wt% of a laser direct structuring additive; wherein the combined weight percent value of all components does not exceed about 100 wt%; wherein all weight percent values are based on the total weight of the composition; and wherein a molded sample of the blended thermoplastic composition exhibits a plating index value of at least about 0.5. For example, the plating index is at least 0.6. In further examples, the plating index is at least 0.7.

## ARTICLES of MANUFACTURE

Shaped, formed, or molded articles including the polymer compositions are also provided. The polymer compositions can be molded into useful shaped articles by a variety of means such as injection molding, extrusion, rotational molding, blow molding and thermoforming to form articles such as, for example, personal computers, notebook and portable computers, cell phone antennas and other such communications equipment, medical applications, radio frequency identification (RFID) applications, automotive applications, and the like.

The blended polymer compositions, disclosed herein provide robust plating performance while maintaining good mechanical properties. Evaluation of the mechanical properties can be performed through various tests, such as Izod impact test (notched and/or unnotched), Charpy test, Gardner test, etc., according to several standards (e.g., ASTM D256). Robustness of plating performance can be measured via a performance ranking, or plating ranking, ranging from top performance (e.g., "best") to bottom performance. The ranking can be partitioned in various levels. In one aspect, a plating ranking can have a level of "10" for top performance and a level of "0" for bottom performance.

In a further aspect, the method comprises forming a molded part from the composition. In another aspect, the method further comprises subjecting the molded part to a laser direct structuring process.

In one aspect, the article comprises the product of extrusion molding or injection molding a composition as defined in the present claims comprising a thermoplastic polymer, a laser directing structuring additive and a reinforcing filler.

In a further aspect, the molded article further comprises a conductive path formed by activation with a laser. In a yet further aspect, the article further comprises a metal layer plated onto the conductive path. In an even further aspect, the metal layer is a copper layer. In a still further aspect, the metal layer has a thickness of about 0.8 micrometers or higher as measured according to ASTM B568.

In various aspects, the polymer composition can be used in the field of electronics. In a further aspect, non-limiting examples of fields which can use the disclosed blended polymer compositions include electrical, electro-mechanical, Radio Frequency (RF) technology, telecommunication, automotive, aviation, medical, sensor, military, and security. In a still further aspect, the use of the disclosed blended polymer compositions can also be present in overlapping fields, for example in mechatronic systems that integrate mechanical and electrical properties which may, for example, be used in automotive or medical engineering.

In one aspect, molded articles according to the present disclosure can be used to produce a device in one or more of the foregoing fields. In a still further aspect, non-limiting examples of such devices in these fields which can use the disclosed blended polymer compositions according to the present disclosure include computer devices, household appliances, decoration devices, electromagnetic interference devices, printed circuits, Wi-Fi devices, Bluetooth devices, GPS devices, cellular antenna devices, smart phone devices, automotive devices, military devices, aerospace devices, medical devices, such as hearing aids, sensor devices, security devices, shielding devices, RF antenna devices, LED devices, or RFID devices. In yet a further aspect, the device is selected from a computer device, electromagnetic interference device, automotive device, medical device, sensor device, security device, shielding device, RF antenna device, LED device and RFID device. In an even further aspect, the device is selected from a computer device, sensor device, security device, RF antenna device, LED device and RFID device. In a still further aspect, the device is selected from a computer device, LED device and RFID device. In yet a further aspect, the device is a LED device. In an even further aspect, the device is a LED lamp.

In a still further aspect, the molded articles can be used to manufacture devices in the automotive field. In a further aspect, non-limiting examples of such devices in the automotive field which can use the disclosed blended polymer compositions in the vehicle's interior include adaptive cruise control, headlight sensors, windshield wiper sensors, and door/window switches. In a further aspect, non-limiting examples of devices in the automotive field which can use the disclosed blended polymer compositions in the vehicle's exterior include pressure and flow sensors for engine management, air conditioning, crash detection, and exterior lighting fixtures.

In a further aspect, the resulting disclosed compositions can be used to provide any desired shaped, formed, or molded articles. For example, the disclosed compositions can be molded into useful shaped articles by a variety of means such as injection molding, extrusion, rotational molding, blow molding and thermoforming. As noted above, the disclosed compositions are particularly well suited for use in the manufacture of electronic components and devices. As such, according to some aspects, the disclosed compositions can be used to form articles such as printed circuit board carriers, burn in test sockets, flex brackets for hard disk drives, and the like.

In various aspects, a molded article comprising the disclosed blended thermoplastic compositions can have a heat deflection temperature from about 100 °C to about 280 °C when determined in accordance with ASTM D648. In a further aspect, a molded article comprising the disclosed blended thermoplastic compositions can have a heat deflection temperature from about 125 °C to about 270 °C when determined in accordance with ASTM D648. In a still further aspect, a molded article comprising the disclosed blended thermoplastic compositions can have a heat deflection temperature of at least 150 °C such as from about 150 °C to about 260 °C when determined in accordance with ASTM D648.

While colorants or dyes or pigments may be used in the present invention, they are not required. These colorants may be used because the natural color of the composition is much lighter than previous LDS compositions using an LDS additive that resulted in a composition that was black, or close to black, such that no colorant may have been effective. Accordingly, the compositions of the present invention have, in one embodiment, an L* value of 40 to 95 or 40 to 85. In an alternative embodiment, the compositions of the present invention have, in one embodiment, an L* value of 45 to 80. In yet another alternative embodiment, the compositions of the present invention have, in one embodiment, an L* value of 50 to 75. The "L* value" describes the lightness-darkness property. If the L* value:0, the object is black. If the L* value:100 the object is white. The L* value is always positive. Compositions having an L* value further away from the extremes (0 and 100) have a more natural color, which may be the selected color for a specific application or which may enable the composition to be more easily colored. L* is measured using ASTM 2244 With 10 degree observer; D65 illuminant; SCI reflectance; and large aperture). The compositions having a L* of 40 to 85 results in the compositions having color space that could be achieved based on this light color naturally in the range of from 28 to 94. As used herein, the L* of the material naturally is the value of material without any colorant. Having values further away from 0 for L* results in a composition that has a much wider "color space". The "color space" is the range of L* that can be achieved using an optional colorant, pigment and/or dye. The compositions of the present invention have a much larger color space as compared to prior art LDS compositions, such that the compositions of the present invention are colorable.

The color properties of the composition may also be defined using the a* and b* values. The a* value describes the position on a red-green axis. If a* is positive, the shade is red and if a* is negative, the shade is green. The b* value describes the position on a yellow-blue axis. If b* is positive, the shade is yellow and if b* is negative, the shade is blue. When a* and b* are near zero and L is bigger, the result is a lighter color for the composition. For compositions of the present invention, it is beneficial for the a* and b* values naturally occurring in the compositions to be closer to zero since, as before, this enables a much larger color space to be achieved. In one embodiment, the compositions have an a* value of from -5 to 0 or from -1 to -5 and a b* value of from -10 to 30 or from -5 to 20. This results in a color space capable of being achieved by the compositions of -50 to 52 for a* and -40 to 80 for b*. Again, as may be seen, since the compositions of the present invention utilize an LDS additive that is not darker in nature, a much wider array of color possibilities is possible. ASTM 2244 is also used to determine a* and b* values

In various aspects, the present disclosure pertains to and includes at least the following aspects.

Aspect 1A. A thermoplastic composition comprising:

(a) 20 wt% to 99 wt% of a polymer component comprising (1) polycarbonate and a polycarbonate-siloxane copolymer or (2) poly (p-phenylene oxide); and

(b) about 1 wt% to about 30 wt% of a laser activatable additive having a core-shell structure; wherein the core comprises an inorganic filler and the shell comprises a laser activatable component comprising copper hydroxide phosphate or tin and antimony oxide, said core comprising from about 10 wt% to about 80 wt% of the laser activatable additive and said shell comprising from about 20 wt% to about 90 wt% of the laser activatable additive; wherein the weight percent values of (a) and (b) are based on the total weight of the composition and the combined weight percent value of all components does not exceed 100 wt. %.

Aspect 1B. A thermoplastic composition consisting essentially of:

(a) 20 wt% to 99 wt% of a polymer component comprising (1) polycarbonate and a polycarbonate-siloxane copolymer or (2) poly (p-phenylene oxide);; and

(b) about 1 wt% to about 30 wt% of a laser activatable additive having a core-shell structure; wherein the core comprises an inorganic filler and the shell comprises a laser activatable component comprising copper hydroxide phosphate or tin and antimony oxide, said core comprising from about 10 wt% to about 80 wt% of the laser activatable additive and said shell comprising from about 20 wt% to about 90 wt% of the laser activatable additive; wherein the weight percent values of (a) and (b) are based on the total weight of the composition and the combined weight percent value of all components does not exceed 100 wt. %.

Aspect 2. The thermoplastic composition of Aspect 1, where in the core comprises $TiO_2$, mica or talc.

Aspect 3. The thermoplastic composition of any one of Aspects 1-2, wherein the laser activatable component comprises tin-antimony oxide or copper hydroxide phosphate compound.

Aspect 4. The thermoplastic composition of any one of Aspects 1-3, wherein core comprises $TiO_2$ and the shell comprises Tin-Antimony Cassiterite Grey [$(Sb/Sn)O_2$].

Aspect 5. The thermoplastic composition of any one of Aspects 1-4, wherein the amount of laser activatable additive is from about 5 wt% to about 15 wt%.

Aspect 6. The thermoplastic composition of any of the preceding Aspects, wherein said core comprising from about 30 wt% to about 70 wt% of the laser activatable additive and said shell comprising from about 30 wt% to about 70 wt% of the laser activatable additive.

Aspect 7. The thermoplastic composition of any of the preceding Aspects, wherein said core comprising from about 45 wt% to about 65 wt% of the laser activatable additive and said shell comprising from about 35 wt% to about 55 wt% of the laser activatable additive.

Aspect 8. The thermoplastic composition of any one of Aspects 1-7, wherein the polymer component comprises polypropylene.

Aspect 9. The thermoplastic composition of any one of Aspects 1-7, wherein the polymer component comprises polycarbonate.

Aspect 10. The thermoplastic composition of Aspect 9 additionally comprising polysiloxne-polycarbonate copolymer.

Aspect 11. The thermoplastic composition of any of the preceding Aspects which is substantially free of glass filler.

Aspect 12. An article comprising a thermoplastic composition of any one of Aspects 1-11.

Aspect 13. The article of Aspect 12, wherein the article is selected from a computer device, electromagnetic interference device, printed circuit, Wi-Fi device, Bluetooth device, GPS device, cellular antenna device, smart phone device, automotive device, medical device, sensor device, security device, shielding device, RF antenna device, LED device and RFID device.

Aspect 14. The article of Aspect 12 or Aspect 13, wherein the article is a component of a cell phone antenna.

Aspect 15A. A method of producing a thermoplastic blend, the method comprising the step of combining:

(a) 20 wt% to 99 wt% of a polymer component comprising (1) polycarbonate and a polycarbonate-siloxane copolymer or (2) poly (p-phenylene oxide); and
(b) about 1 wt% to about 30 wt% of a laser activatable additive having a core-shell structure; wherein the core comprises an inorganic filler and the shell comprises a laser activatable component comprising copper hydroxide phosphate or tin and antimony oxide, said core comprising from about 10 wt% to about 80 wt% of the laser activatable additive and said shell comprising from about 20 wt% to about 90 wt% of the laser activatable additive;

wherein the weight percent values of (a) and (b) are based on the total weight of the composition and the combined weight percent value of all components does not exceed 100 wt. %.

Aspect 16. A method of manufacturing an article comprising: molding an article from the composition of Aspect 1; exposing the laser activatable additive to a laser to form an activated area; and plating a metal layer onto the activated area.

Aspect 17. The method of any one of Aspects 15A-16, wherein an article formed from the thermoplastic blend has a heat distortion temperature of greater than 150 °C.

Aspect 19. The method of Aspect 16, wherein the forming an article comprises injection molding.

Without further elaboration, it is believed that one skilled in the art can, using the description herein, utilize the present disclosure. The following examples are included to provide addition guidance to those skilled in the art of practicing the aspects of the disclosure. The examples provided are merely representative of the work and contribute to the teaching of the present disclosure. Accordingly, these examples are not intended to limit the disclosure in any manner.

## EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (*e.g.*, amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

All samples were prepared by melt extrusion on a Toshiba Twin screw extruder, using different melt temperature and RPM according to different polymer component. Tests were all conducted in accordance with ASTM standards, referenced in each test below.

The special (specific) gravity ("SG") was determined in accordance with ASTM D792. The units are grams per

cubic centimeter (g/cm$^3$).

Melt Volume-flow Rate ("MVR") was determined in accordance with ASTM D1238 under a load of 5.0 kilogram (kg) and at 300 °C. Melt Flow Rate ("MFR") was determined in accordance with ASTM D1238 under a load of 1.2 kg and at 300°C. The units are cubic centimeters per 10 minutes (cm$^3$/10 min.)

Izod impact strength was determined at 23 °C and -20 °C on 3.2 millimeter (mm) thick injection molded samples in accordance with ASTM D256 (notched Izod impact strength, "NII"), and in accordance with ASTM D4812 (unnotched Izod impact strength, "UII").

Tensile testing was carried out at 50 millimeter per minute (mm/min) at 23 °C on standard tensile injection molded bars in accordance with ASTM D638.

Flexural testing was carried out at 1.27 mm/min and 3.2 mm thick injection molded sample in accordance with ASTM D790.

Heat deflection temperature ("HDT") was determined at 0.45 MPa on injection molded samples (127*12.7*3.2 mm bars) in accordance with ASTM D648.

Plating index was determined in accordance with ASTM B568 by testing the copper thickness using X-Ray Fluorescence ("XRF"). Briefly, LDS is carried out on molded plaques with laser power, frequency, and speed varied as indicated. A reference sample for XRF determinations was prepared using Pocan™ DP 7102 with copper plating at about 5 $\mu$m. Copper thickness was determined on the reference sample on both sides and at four discrete sample points. The copper thickness values were averaged for the reference sample and the average value is referred to X$_{ref}$. The plating index is defined by the following equation:

$$\text{Plating index} = \frac{\text{Average copper thickness for one parameter field}}{\text{Average copper thickness for reference sick X}_{ref}}$$

Heat deflection temperature ("HDT") was determined at 1.82 MPa on injection molded samples (127*12.7*3.2 mm bars) in accordance with ASTM D648.

Table 1 lists a typical extrusion profile of the compositions disclosed herein.

**Table 1.** Typical extrusion profile of PPO and PC based compositions

| Parameters | Unit | Polyphenylene Oxide (PPO) | Polycarbonate (PC) |
|---|---|---|---|
| Compounder Type | NONE | TEM-37BS | TEM-37BS |
| Barrel Size | mm | 1500 | 1500 |
| Die | mm | 4 | 3 |
| Zone 1 Temp | °C | 90 | 50 |
| Zone 2 Temp | °C | 150 | 100 |
| Zone 3 Temp | °C | 270 | 255 |
| Zone 4 Temp | °C | 270 | 255 |
| Zone 5 Temp | °C | 280 | 255 |
| Zone 6 Temp | °C | 280 | 255 |
| Zone 7 Temp | °C | 280 | 255 |
| Zone 8 Temp | °C | 290 | 255 |
| Zone 9 Temp | °C | 290 | 255 |
| Zone 10 Temp | °C | 290 | 255 |
| Zone 11 Temp | °C | 290 | 255 |
| Die Temp | °C | 290 | 255 |
| Screw speed | rpm | 300 | 400 |
| Throughput | kg/hr | 30 | 40 |
| Torque | NONE | 50-55 | 80-85 |
| Vacuum 1 | MPa | -0.08 | -0.08 |

(continued)

| Parameters | Unit | Polyphenylene Oxide (PPO) | Polycarbonate (PC) |
|---|---|---|---|
| Side Feeder 1 speed | rpm | 250 | 250 |
| Melt temperature | NONE | 280-290 | 275-285 |

Table 2 lists a typical molding profile for the disclosed compositions.

**Table 2.** Typical molding profile of PPO and PC based compositions

| Parameters | Unit | Polyphenylene Oxide (PPO) | Polycarbonate (PC) |
|---|---|---|---|
| Cnd: Pre-drying time | Hour | 3 | 3 |
| Cnd: Pre-drying temp | °C | 105 | 110 |
| Molding Machine | NONE | FANUC, ES3000 | FANUC, ES3000 |
| Mold Type (insert) | NONE | ASTM tensile, flexural, and Izod bars; Color chips; 150 mm×150 mm×2.0mm plaques | |
| Hopper temp | °C | 50 | 50 |
| Zone 1 temp | °C | 270-280 | 270-280 |
| Zone 2 temp | °C | 280-290 | 270-280 |
| Zone 3 temp | °C | 290-300 | 280-290 |
| Nozzle temp | °C | 280-290 | 270-280 |
| Mold temp | °C | 90-120 | 90-120 |
| Screw speed | rpm | 100 | 100 |
| Back pressure | kgf/cm$^2$ | 90 | 30 |
| Cooling time | s | 15-20 | 15-25 |
| Injection speed | mm/s | 25-100 | 50-100 |
| Holding pressure | kgf/cm$^2$ | 600-1000 | 600-1200 |
| Max. Injection pressure | kgf/cm$^2$ | 800-1500 | 1000-1500 |

Screw speed is revolutions per minute (rpm); back pressure, holding pressure, and maximum injection pressure are presented in kilogram-force per square centimeter (kg-f/cm2); cooling time is in seconds (s), injection speed is millimeters per second (m/s).

Laser platable thermoplastic compositions using a laser activatable compound as the LDS additive were developed based on the resins of PPO and PC. The LDS additive is available from Merck under the trade name of Iriotec™ 8850. TiO$_2$ (rutile) was used as the core with the weight ratio (wt%) from 45% to 65%. Tin-Antimony Cassiterite Grey [(Sb/Sn)O$_2$], a laser activatable compound, was applied as the shell with the wt% from 35% to 55%. The developed compositions showed good plating, mechanical, and processing performance. The developed compositions using poly (p-phenylene oxide)/polystyrene/ styrene-ethylene-butadiene-styrene (PPO/PS/SEBS) as the polymer components are listed in Table 3 (E1.1 and E1.2).

**Table 3.** Formulations of PPO based LDS capable compositions with the core-shell structural LDS additive.

| Item Description | Unit | E1.1 | E1.2 |
|---|---|---|---|
| PPO, 0.46 deciliters per gram (dl/g) intrinsic viscosity IV | % | 65.7 | 67.7 |
| SEBS, Styrene ethylene butylene styrene copolymer from KRATON™ SEBS G1652, low viscosity (melt Index higher than 3g/10min at 230°C/5kg); | % | 8 | 8 |
| GPPS, general purpose polystyrene | % | 15 | 15 |

(continued)

| Item Description | Unit | E1.1 | E1.2 |
|---|---|---|---|
| $TiO_2$ coated with $(Sn/Sb)O_2$ | % | 10 | 8 |
| LLDPE, Linear low density polyethylene | % | 1 | 1 |
| MAG OXIDE, magnesium oxide | % | 0.1 | 0.1 |
| Zinc sulfide | % | 0.1 | 0.1 |
| Phosphite Stabilizer | % | 0.1 | 0.1 |

Physical properties and plating performance of the developed laser platable compositions with the core-shell structural LDS additive are listed in Table 4 and Table 5, respectively. When 10 wt% of the laser activatable additive was applied, the developed composition had good mechanical and thermal performance, with a room temperature notch Izod of 197 joules per meter (J/m) and HDT at 0.45MPa of 166 °C (E1.1 in Table 4). For the plating performance, as shown in Table 5, plating results could be satisfied under most plating conditions. Moreover, the average plating index was 0.78, meaning that the plating performance of the developed composition was good. When using 8% LDS compound as the additive, impact strength of the developed composition could be a little higher, reaching 225 J/m at room temperature. Meanwhile, the plating performance was still quite good, with the average plating index of 0.83 (E1.2 in Table 4). The L value of the developed compositions were around 70, indicating that light color LDS products could be produced if the LDS additive was applied in the formulation.

**Table 4.** Properties of the PPO based LDS capable compositions with the core-shell structural LDS additive

| Typical Property | Test Method | Test Description | Unit | E1.1 | E1.2 |
|---|---|---|---|---|---|
| Density | Specific Gravity | ASTM D792 | $g/cm^3$ | 1.144 | 1.129 |
| MVR | 300 °C/5.0 kilograms (kg) | ASTM D1238 | $cm^3$/ 10min | 11.0 | 11.2 |
| Notched IZOD | 23°C, 5 foot-pound (lbf/ft) | ASTM D256 | J/m | 197 | 225 |
| Notched IZOD | -20°C, 5 lbf/ft | ASTM D256 | J/m | 84 | 90 |
| HDT | 0.45 megapascal(MPa)/ 3.2 millimeter (mm) | ASTM D648 | °C | 166 | 167 |
| Flexural Modulus | 3.2 mm, 1.27 mm/min | ASTM D790 | MPa | 2030 | 1960 |
| Flexural Strength | at yield, 3.2 mm, 1.27 mm/min | ASTM D790 | MPa | 88 | 86 |
| Flexural Strength | at break, 3.2mm, 1.27 mm/min | ASTM D790 | MPa | 87 | 84 |
| Tensile Modulus | 50 mm/min | ASTM D638 | MPa | 2150 | 2100 |
| Tensile Strength | at yield, 50 mm/min | ASTM D638 | MPa | 59 | 58 |
| Tensile Elongation | at yield, 50 mm/min | ASTM D638 | % | 11.2 | 11.4 |
| Tensile Strength | at break, 50 mm/min | ASTM D638 | MPa | 35 | 35 |
| Tensile Elongation | at break, 50 mm/min | ASTM D638 | % | 30.0 | 30.8 |
| Color | L | | / | 70.2 | 69.8 |
| | a | | / | -2.4 | -2.4 |
| | b | | / | 6.2 | 6.8 |
| PI-Avg | Plating Index | | / | 0.78 | 0.83 |

Note: Plating index (PI) is an index that is applied to evaluate the plating performance. It is a relative value of the metal thickness of the test sample to the standard one, which was tested by X-ray fluorescence technology. The higher the PI, the better the plating performance.

**Table 5.** Plating performance of the PPO based LDS capable compositions with the core-shell structural LDS additive

| Power (W) | Frequency (KHz) | Speed (m/s) | E1.1 | E1.2 |
|---|---|---|---|---|
| 10 | 100 | 2 | 0.58 | 0.87 |
| 10 | 70 | 2 | 0.63 | 0.84 |
| 10 | 40 | 2 | 0.79 | 0.96 |
| 2 | 100 | 2 | 0.31 | 0.07 |
| 2 | 70 | 2 | 0.64 | 0.50 |
| 2 | 40 | 2 | 0.60 | 0.80 |
| 7 | 80 | 4 | 1.07 | 1.27 |
| 5 | 80 | 4 | 0.97 | 0.49 |
| 3 | 80 | 4 | 0.27 | 0.12 |
| 3 | 100 | 2 | 0.79 | 0.55 |
| 3 | 70 | 2 | 1.04 | 0.95 |
| 3 | 40 | 2 | 1.01 | 1.12 |
| 5 | 100 | 4 | 0.95 | 0.94 |
| 3 | 100 | 4 | 0.11 | 0.04 |
| 9 | 80 | 4 | 1.05 | 1.25 |
| 5 | 100 | 2 | 0.63 | 0.76 |
| 5 | 70 | 2 | 0.90 | 0.96 |
| 5 | 40 | 2 | 1.06 | 1.17 |
| 11 | 100 | 4 | 1.05 | 1.20 |
| 9 | 100 | 4 | 1.01 | 1.23 |
| 7 | 100 | 4 | 1.09 | 1.25 |
| 8 | 100 | 2 | 0.59 | 0.71 |
| 8 | 70 | 2 | 0.60 | 0.73 |
| 8 | 40 | 2 | 0.95 | 1.07 |

The developed compositions using polycarbonate (PC) as the polymer component are listed in Table 6 (E2.1 and E2.2). The corresponding physical and detailed plating performance of the developed compositions are listed in Table 7 and Table 8, respectively. As shown in E2.1, when 10 wt% of the core-shell structural LDS additive was applied in the formulation, plating performance of the composition was good, with an average plating index of 0.86. Meanwhile, the mechanical, thermal and flow performance of the composition were also good, showing the room temperature notch Izod as high as 837 J/m and HDT at 0.45MPa of 135°C. The L value of the developed composition was 71.3, meaning that colorable products could be available when using this laser activatable metal compound as the LDS additive. Moreover, when the loading of the LDS additive was decreased to 5%, the composition could still be platable, with the plating index of 0.58 (E2.2 in Table 7 & 8). Checking the detailed plating results under diverse plating conditions, plating performance of this composition could be satisfied under many plating conditions (those with a PI value higher than 0.7). The L value of the composition in E2.2 was a little higher than that in E2.1, indicating that colorability of the composition could be improved.

**Table 6.** Formulation of PC based LDS capable compositions with the core-shell structural LDS additive

| Item Description | Unit | E2.1 | E2.2 |
|---|---|---|---|
| Polycarbonate Resin, 100 Grade PCP | % | 52.9 | 55.9 |
| Polycarbonate Resin, PCP1300 (paracumyl phenol) | % | 26 | 28 |

(continued)

| Item Description | Unit | E2.1 | E2.2 |
|---|---|---|---|
| 20% PC/siloxane copolymer, PCP (paracumyl phenol) Endcapped | % | 10 | 10 |
| TiO$_2$ coated with (Sn/Sb)O$_2$, 8850 | % | 10 | 5 |
| Phosphite Stabilizer | % | 0.1 | 0.1 |
| Hindered Phenol Anti-oxidant | % | 0.1 | 0.1 |
| Pentaerythritol Tetrastearate | % | 0.5 | 0.5 |
| Styrene-acrylate-epoxy oligomer | % | 0.1 | 0.1 |
| Mono Zinc Phosphate (MZP) | % | 0.3 | 0.3 |
| Note: PCP is para-cumylphenol end-capped. | | | |

**Table 7.** Properties of the PC based LDS capable compositions with the core-shell structural LDS additive

| Typical Property | Test Method | Test Description | Unit | E2.1 | E2.2 |
|---|---|---|---|---|---|
| Density | Specific Gravity | ASTM D792 | g/cm$^3$ | 1.281 | 1.236 |
| MFR | 300°C/1.2 kilograms (kg) /300 seconds (s) | ASTM D1238 | g/10min | 12.2 | 12.8 |
| Notched IZOD | 23°C, 5 foot-pounds (lbf/ft) | ASTM D256 | J/m | 837 | 872 |
| HDT | 0.45 megapascals (MPa) /3.2 millimeters (mm) | ASTM D648 | °C | 135 | 134 |
| HDT | 1.82 MPa/3.2 mm | ASTM D648 | °C | 123 | 122 |
| Flexural Modulus | 3.2 mm, 1.27 millimeters per minute (mm/min) | ASTM D790 | MPa | 2320 | 2280 |
| Flexural Strength | at yield, 3.2 mm, 1.27 mm/min | ASTM D790 | MPa | 90 | 91 |
| Flexural Strength | at break, 3.2 mm, 1.27 mm/min | ASTM D790 | MPa | 88 | 89 |
| Tensile Modulus | 50 mm/min | ASTM D638 | MPa | 2398 | 2318 |
| Tensile Strength | at yield, 50 mm/min | ASTM D638 | MPa | 57 | 59 |
| Tensile Elongation | at yield, 50 mm/min | ASTM D638 | % | 5.7 | 5.8 |
| Tensile Strength | at break, 50 mm/min | ASTM D638 | MPa | 48 | 50 |
| Tensile Elongation | at break, 50 mm/min | ASTM D638 | % | 50.7 | 64.6 |
| Color coordinates | L | | / | 71.3 | 73.6 |
| | a | | / | -3.1 | -3.4 |
| | b | | / | 0.9 | -0.5 |
| PI-Avg | Plating Index | | / | 0.86 | 0.58 |

Plating index (PI) is an index that is applied to evaluate the plating performance. It is a relative value of the metal thickness of the test sample to the standard one, which was tested by X-ray fluorescence technology. The higher the PI, the better the plating performance.

**Table 8.** Plating performance of the PC based LDS capable compositions with the core-shell structural LDS additive

| Power (W) | Frequency (KHz) | Speed (m/s) | E2.1 | E2.2 |
|---|---|---|---|---|
| 10 | 100 | 2 | 0.64 | 0.44 |

(continued)

| Power (W) | Frequency (KHz) | Speed (m/s) | E2.1 | E2.2 |
|---|---|---|---|---|
| 10 | 70 | 2 | 0.82 | 0.58 |
| 10 | 40 | 2 | 0.84 | 0.66 |
| 2 | 100 | 2 | 0.30 | 0.00 |
| 2 | 70 | 2 | 0.75 | 0.01 |
| 2 | 40 | 2 | 0.94 | 0.37 |
| 7 | 80 | 4 | 1.11 | 0.95 |
| 5 | 80 | 4 | 1.14 | 0.45 |
| 3 | 80 | 4 | 0.63 | 0.10 |
| 3 | 100 | 2 | 0.90 | 0.27 |
| 3 | 70 | 2 | 1.16 | 0.82 |
| 3 | 40 | 2 | 1.18 | 0.73 |
| 5 | 100 | 4 | 1.02 | 0.36 |
| 3 | 100 | 4 | 0.28 | 0.00 |
| 9 | 80 | 4 | 1.10 | 0.95 |
| 5 | 100 | 2 | 0.74 | 0.68 |
| 5 | 70 | 2 | 0.84 | 0.83 |
| 5 | 40 | 2 | 1.11 | 0.87 |
| 11 | 100 | 4 | 0.80 | 0.80 |
| 9 | 100 | 4 | 0.96 | 0.88 |
| 7 | 100 | 4 | 1.13 | 0.91 |
| 8 | 100 | 2 | 0.68 | 0.62 |
| 8 | 70 | 2 | 0.75 | 0.70 |
| 8 | 40 | 2 | 0.84 | 0.83 |

The patentable scope of the disclosure is defined by the claims.

**Claims**

1.  A thermoplastic composition comprising:

    a. 20 wt% to 99 wt% of a polymer component comprising (1) polycarbonate and a polycarbonate-siloxane copolymer or (2) poly (p-phenylene oxide); and
    b. 1 wt% to 30 wt% of a laser activatable additive having a core-shell structure; wherein the core comprises an inorganic filler and the shell comprises a laser activatable component comprising copper hydroxide phosphate or tin and antimony oxide, said core comprising from 10 wt% to 80 wt% of the laser activatable additive and the shell comprising from 20 wt% to 90 wt% of the laser activatable additive;
    c. wherein the weight percent values of (a) and (b) are based on the total weight of the composition and the combined weight percent value of all components does not exceed 100 wt. %.

2.  The thermoplastic composition of claim 1, where in the core comprises titanium dioxide, mica or talc.

3.  The thermoplastic composition of any one of claims 1-2, wherein the laser activatable component comprises tin-antimony oxide or copper hydroxide phosphate compound.

4. The thermoplastic composition of any one of claims 1-3, wherein core comprises titanium dioxide and the shell comprises tin-antimony cassiterite grey [(Sb/Sn)O$_2$].

5. The thermoplastic composition of any one of claims 1-4, wherein the amount of laser activatable additive is from 5 wt% to 15 wt%.

6. The thermoplastic composition of any one of claims 1-5, wherein the composition is substantially free of glass filler.

7. The thermoplastic composition of any one of claims 1-5, wherein said core comprises from 45 wt% to 65 wt% of the laser activatable additive and the shell comprising from 35 wt% to 55 wt% of the laser activatable additive

8. An article comprising a thermoplastic composition of any one of claims 1-7, wherein the article is a component of a cell phone antenna.

9. A method of producing a thermoplastic blend, the method comprising:

    a. the step of combining to form a mixture:

        (a) 20 wt% to 99 wt% of a polymer component comprising (1) polycarbonate and a polycarbonate-siloxane copolymer or (2) poly (p-phenylene oxide); and
        1 wt% to 30 wt% of a laser activatable additive having a core-shell structure; wherein the core comprises an inorganic filler and the shell comprises a laser activatable component comprising copper hydroxide phosphate or tin and antimony oxide, said core comprising from 10 wt% to 80 wt% of the laser activatable additive and the shell comprising from 20 wt% to 90 wt% of the laser activatable additive; and

    b. blending the miture to form the thermoplastic blend,
    wherein the weight percent values of (a) and (b) are based on the total weight of the composition and the combined weight percent value of all components does not exceed 100 wt. %.

10. The method of claim 9, wherein an article formed from the thermoplastic blend has a heat distortion temperature of greater than 150 °C when determined in accordance with ASTM D648.

11. A method of manufacturing an article comprising:

    a. forming an article from the thermoplastic composition of claim 1;
    b. exposing at least a portion of the article to laser energy to form an activated area; and
    c. plating a metal layer onto the activated area.

12. The method of claim 11, wherein the forming an article comprises injection molding.

**Patentansprüche**

1. Thermoplastische Zusammensetzung, umfassend:

    a. 20 Gew.-% bis 99 Gew.-% einer Polymerkomponente, umfassend (1) Polycarbonat und ein Polycarbonat-Siloxan-Copolymer oder (2) Poly(p-phenylenoxid); und
    b. 1 Gew.-% bis 30 Gew.-% eines laseraktivierbaren Additivs mit einer Kern-Schale-Struktur; wobei der Kern einen anorganischen Füllstoff umfasst und die Schale eine laseraktivierbare Komponente umfasst, die Kupferhydroxidphosphat oder Zinn- und Antimonoxid umfasst, wobei der Kern 10 Gew.-% bis 80 Gew.-% des laseraktivierbaren Additivs umfasst und die Schale 20 Gew.-% bis 90 Gew.-% des laseraktivierbaren Additivs umfasst;
    c. wobei die Gewichtsprozentwerte von (a) und (b) auf das Gesamtgewicht der Zusammensetzung bezogen sind und der kombinierte Gewichtsprozentwert aller Komponenten 100 Gew.- % nicht übersteigt.

2. Thermoplastische Zusammensetzung nach Anspruch 1, wobei der Kern Titandioxid, Glimmer oder Talkum umfasst.

3. Thermoplastische Zusammensetzung nach einem der Ansprüche 1 bis 2, wobei die laseraktivierbare Komponente Zinn-Antimonoxid oder eine Kupferhydroxidphosphat-Verbindung umfasst.

**EP 3 568 433 B1**

4. Thermoplastische Zusammensetzung nach einem der Ansprüche 1 bis 3, wobei der Kern Titandioxid umfasst und die Schale Zinn-Antimon-Kassiterit-Grau [(Sb/Sn)O2] umfasst.

5. Thermoplastische Zusammensetzung nach einem der Ansprüche 1 bis 4, wobei die Menge des laseraktivierbaren Additivs 5 Gew.-% bis 15 Gew.-% beträgt.

6. Thermoplastische Zusammensetzung nach einem der Ansprüche 1 bis 5, wobei die Zusammensetzung im Wesentlichen frei von Glasfüllstoff ist.

7. Thermoplastische Zusammensetzung nach einem der Ansprüche 1 bis 5, wobei der Kern 45 Gew.-% bis 65 Gew.-% des laseraktivierbaren Additivs umfasst und die Schale 35 Gew.-% bis 55 Gew.-% des laseraktivierbaren Additivs umfasst.

8. Gegenstand, umfassend eine thermoplastische Zusammensetzung nach einem der Ansprüche 1 bis 7, wobei der Gegenstand eine Komponente einer Mobiltelefonantenne ist.

9. Verfahren zur Herstellung einer thermoplastischen Mischung, wobei das Verfahren Folgendes umfasst:

   a. den Schritt des Kombinierens zur Bildung eines Gemisches:

   (a) 20 Gew.-% bis 99 Gew.-% einer Polymerkomponente, umfassend (1) Polycarbonat und ein Polycarbonat-Siloxan-Copolymer oder (2) Poly(p-phenylenoxid); und
   1 Gew.-% bis 30 Gew.-% eines laseraktivierbaren Additivs mit einer Kern-Schale-Struktur; wobei der Kern einen anorganischen Füllstoff umfasst und die Schale eine laseraktivierbare Komponente umfasst, die Kupferhydroxidphosphat oder Zinn- und Antimonoxid umfasst, wobei der Kern 10 Gew.-% bis 80 Gew.-% des laseraktivierbaren Additivs umfasst und die Schale 20 Gew.-% bis 90 Gew.-% des laseraktivierbaren Additivs umfasst; und

   b. Mischen des Gemisches, um die thermoplastische Mischung zu bilden,
   wobei die Gewichtsprozentwerte von (a) und (b) auf das Gesamtgewicht der Zusammensetzung bezogen sind und der kombinierte Gewichtsprozentwert aller Komponenten 100 Gew.- % nicht übersteigt.

10. Verfahren nach Anspruch 9, wobei ein Gegenstand, der aus der thermoplastischen Mischung geformt wird, eine Wärmeformbeständigkeit von mehr als 150°C aufweist, wenn sie in Übereinstimmung mit ASTM D648 bestimmt wird.

11. Verfahren zum Erzeugen eines Gegenstands, umfassend:

   a. Formen eines Gegenstands aus der thermoplastischen Zusammensetzung nach Anspruch 1;
   b. Aussetzen mindestens eines Teils des Gegenstands an Laserenergie, um einen aktivierten Bereich zu bilden; und
   c. Plattieren einer Metallschicht auf den aktivierten Bereich.

12. Verfahren nach Anspruch 11, wobei das Formen eines Gegenstands Spritzgießen umfasst.

**Revendications**

1. Composition thermoplastique comprenant :

   a. 20 % en poids à 99 % en poids d'un composant polymère comprenant (1) un polycarbonate et un copolymère polycarbonate-siloxane ou (2) un poly (oxyde de p-phénylène) ; et
   b. 1 % en poids à 30 % en poids d'un additif activable par laser ayant une structure noyau-enveloppe ; dans laquelle le noyau comprend une charge inorganique et l'enveloppe comprend un composant activable par laser comprenant du phosphate d'hydroxyde de cuivre ou de l'oxyde d'étain et d'antimoine, ledit noyau comprenant de 10 % en poids à 80 % en poids de l'additif activable par laser et l'enveloppe comprenant de 20 % en poids à 90 % en poids de l'additif activable par laser ;
   c. les valeurs de pourcentage en poids de (a) et (b) étant basées sur le poids total de la composition et la valeur de pourcentage en poids combinée de tous les composants ne dépassant pas 100 % en poids.

**2.** Composition thermoplastique selon la revendication 1, dans laquelle le noyau comprend du dioxyde de titane, du mica ou du talc.

**3.** Composition thermoplastique selon l'une quelconque des revendications 1 et 2, dans laquelle le composant activable par laser comprend un composé oxyde d'étain-d'antimoine ou phosphate d'hydroxyde de cuivre.

**4.** Composition thermoplastique selon l'une quelconque des revendications 1 à 3, dans laquelle le noyau comprend du dioxyde de titane et l'enveloppe comprend du gris de cassitérite étain-antimoine [(Sb/Sn)O2].

**5.** Composition thermoplastique selon l'une quelconque des revendications 1 à 4, dans laquelle la quantité d'additif activable par laser est de 5 % en poids à 15 % en poids.

**6.** Composition thermoplastique selon l'une quelconque des revendications 1 à 5, la composition étant pratiquement exempte de charge de verre.

**7.** Composition thermoplastique selon l'une quelconque des revendications 1 à 5, dans laquelle ledit noyau comprend de 45 % en poids à 65 % en poids de l'additif activable par laser et l'enveloppe comprend de 35 % en poids à 55 % en poids de l'additif activable par laser.

**8.** Article comprenant une composition thermoplastique selon l'une quelconque des revendications 1 à 7, l'article étant un composant d'une antenne de téléphone mobile.

**9.** Procédé de fabrication d'un mélange thermoplastique, le procédé comprenant les étapes consistant à :

   a. combiner pour former un mélange :

   (a) 20 % en poids à 99 % en poids d'un composant polymère comprenant (1) du polycarbonate et un copolymère polycarbonate-siloxane ou (2) du poly (oxyde de p-phénylène) ; et
   1 % en poids à 30 % en poids d'un additif activable par laser ayant une structure noyau-enveloppe ; dans laquelle le noyau comprend une charge inorganique et l'enveloppe comprend un composant activable par laser comprenant du phosphate d'hydroxyde de cuivre ou de l'oxyde d'étain et d'antimoine, ledit noyau comprenant de 10 % en poids à 80 % en poids de l'additif activable par laser et l'enveloppe comprenant de 20 % en poids à 90 % en poids de l'additif activable par laser ; et

   b. mélanger pour former le mélange thermoplastique,
   les valeurs de pourcentage en poids de (a) et (b) étant basées sur le poids total de la composition et la valeur de pourcentage en poids combinée de tous les composants ne dépassant pas 100 % en poids.

**10.** Procédé selon la revendication 9, dans lequel un article formé à partir du mélange thermoplastique a une température de distorsion thermique supérieure à 150°C lorsqu'elle est déterminée conformément à la norme ASTM D648.

**11.** Procédé de fabrication d'un article comprenant les étapes consistant à :

   a. former un article à partir de la composition thermoplastique selon la revendication 1 ;
   b. exposer au moins une partie de l'article à une énergie laser pour former une zone activée ; et
   c. plaquer une couche métallique sur la zone activée.

**12.** Procédé selon la revendication 11, dans lequel l'étape de formation d'un article comprend le moulage par injection.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014180550 A
- EP 2711399 A
- WO 2014042284 A
- WO 2014042285 A
- EP 0750012 A